# EUROPÄISCHE PATENTSCHRIFT

(11) **EP 3 027 468 B1**
(45) Veröffentlichungstag und Bekanntmachung des Hinweises auf die Patenterteilung: **27.12.2017**
(21) Anmeldenummer: 14744845.0
(22) Anmeldetag: 29.07.2014
(51) Int. Cl.: B60R 11/02, B60K 37/00, B62D 25/14, H04R 1/00, H04R 9/00

(54) **KRAFTFAHRZEUGKOMBINATIONSINSTRUMENT MIT EINEM HELMHOLTZ-RESONATOR ALS AKUSTIKKÖRPER**
MOTOR VEHICLE CONTROL PANEL WITH AN HELMHOLTZ RESONATOR ACOUSTIC BODY
COMBINÉ D'INSTRUMENTS AVEC UN CORP ACOUSTIQUE RÉSONATEUR DE HELMHOLTZ

(30) Priorität: 01.08.2013 DE 102013012721
(43) Veröffentlichungstag der Anmeldung: 08.06.2016
(73) Patentinhaber: Johnson Controls Automotive Electronics GmbH, 75196 Remchingen (DE)
(72) Erfinder: Heß, Engelhard, 73760 Ostfildern (DE); Weber, Marcus, 71272 Renningen (DE)
(74) Vertreter: Wolff, Felix
(86) Internationale Anmeldenummer: PCT/EP2014/066309
(87) Internationale Veröffentlichungsnummer: WO 2015/014855

(56) Entgegenhaltungen:
- DE-A1-102012 009 917
- US-A1- 2009 174 682

## Beschreibung

Die vorliegende Erfindung betrifft ein Kraftfahrzeugkombinationsinstrument mit einem vorderen, zu einem Fahrzeuginsassen hin gerichteten Gehäuse und einer Platine, die an dem Gehäuse vorgesehen ist und das einen Lautsprecher aufweist. Kraftfahrzeugkombinationsinstrumente, wie sie beispielsweise aus der FR 2 917 055 bekannt sind, beinhalten Lautsprechersysteme und/oder Relais zur Erzeugung verschiedener Geräusche, beispielsweise das "Klick-Klack" des Blinkers und/oder andere Töne. Die zu erzeugenden Töne sind meist Warntöne und/oder Warnsignale, z. B. Gurtwarnung, Tür-offen-Warnung, Temperaturwarnung, Spur-verlassen-Warnung, Glatteiswarnung und viele andere mehr. Mit der immer größeren Verbreitung von Fahrerassistenzsystemen sind aber außer Warntönen in der Zukunft auch andere akustische Signale als Warntöne denkbar. Dazu gehören die Ausgabe von Sprache genauso wie von Melodien oder von anderen Geräuschen als dem Blinker Geräusch.

Der US20090174682 wird als nächstliegender Stand der Technik angesehen, und offenbart ein Kraftfahrzeugkombinationsinstrument mit den Merkmalen des Oberbegriffs des Anspruchs 1.

Gemäß dem Stand der Technik werden zur Ausgabe dieser Geräusche Lautsprecher und Warnsummer verwendet, welche auf der Rückseite des Kraftfahrzeugkombinationsinstruments angebracht werden. Alle diese Kraftfahrzeugkombinationsinstrumente haben den Nachteil, dass der erzeugte Schall nach hinten aus dem Kombinationsinstrument ausgegeben wird und dadurch von der Instrumententafel stark gedämpft wird, so dass vom ursprünglich erzeugten Schalldruck nur ein Bruchteil beim Fahrer ankommt. Weiterhin führen die bekannten Konstruktionen, die zahlreiche Schlitze und Löcher in der Rückwand enthalten, zur teilweisen Auslöschung von Schallwellen, besonders von Frequenzen unter 3000 Hz. In diesem Frequenzbereich liegen aber die hauptsächlichen Frequenzanteile der akustischen Signale, die ausgegeben werden. Dadurch wird der Schalldruck, der beim Fahrer ankommt, weiter verringert.
Es war deshalb die Aufgabe der vorliegenden Erfindung, ein Kraftfahrzeugkombinationsinstrument zur Verfügung zu stellen, das die Nachteile des Standes der Technik nicht aufweist.

Gelöst wird die Aufgabe durch ein Kraftfahrzeugkombinationsinstrument mit den Merkmalen des Anspruchs 1. Die vorliegende Erfindung betrifft ein Kraftfahrzeugkombinationsinstrument, mit dem beispielsweise die Fahrgeschwindigkeit, die Drehzahl des Motors und/oder die Motortemperatur angezeigt werden kann und mit dem auch akustische und/oder optische Warnhinweise abgesetzt werden können. Oftmals weist ein derartiges Kraftfahrzeugkombinationsinstrument auch noch Informationen über ein sogenanntes Infotainment-System auf. Erfindungsgemäß weist das Kraftfahrzeugkombinationsinstrument ein vorderes, zum Fahrzeuginsassen hin gerichtetes Gehäuse und eine Platine auf. An dem vorderen Gehäuse kann beispielsweise eine Skala. Insbesondere als Abdeckung und damit für den Fahrzeuginsassen sichtbar, vorgesehen sein, mit der beispielsweise die Geschwindigkeit des Fahrzeugs und/oder die Drehzahl des Motors und/oder sonstige Funktionen angezeigt werden. Vorzugsweise weist die Abdeckung auch Symbole auf, die den Fahrzeuginsassen auf Betriebszustände des Fahrzeugs hinweisen. Die Abdeckung kann einstückig mit dem vorderen Gehäuse vorgesehen sein. An der Platine ist die für das Kraftfahrzeugkombinationsinstrument benötigte Elektronik vorgesehen. Die Platine ist vorzugsweise mit dem vorderen Gehäuse verbunden. Weiterhin weist das erfindungsgemäße Kraftfahrzeugkombinationsinstrument einen Lautsprecher auf, der vorzugsweise an der Vor- oder Rückseite der Platine vorgesehen ist. Der Lautsprecher kann an die Platine gelötet oder geclipst werden oder auf sonstige Art und Weise mit der Platine verbunden werden. Beispielsweise ist es möglich, den Lautsprecher mit der Platine mittels Federklemmen und/oder mittels Stecker zu verbinden.

Erfindungsgemäß ist der Lautsprecher in und/oder an einem Akustikkörper angeordnet, der als Helmholtz-Resonator wirkt.

Ein Helmholtz-Resonator im Sinne der Erfindung ist ein akustisches System, das aus einem schwingenden Luftpfropfen und einem angekoppelten federnden Luftvolumen besteht. Der Luftpfropfen hat eine akustische Masse, die sich aus seiner Geometrie und der spezifischen Dichte der Luft ergibt. Sie lagert auf dem federnden Luftkissen des Luftvolumens. Gemeinsam bilden beide ein schwingendes System mit einer spezifischen Resonanzfrequenz, die sich leicht anregen lässt.

Vorzugsweise ist der Akustikkörper aus Kunststoff, insbesondere als Spritzgießteil, gefertigt.

Vorzugsweise ist der Akustikkörper zumindest abschnittsweise zylindrisch und/oder kegelstumpfförmig ausgebildet. Vorzugsweise weist der Resonator einen kreisförmigen Querschnitt auf, wobei der Durchmesser des Querschnitts variieren kann. Der Übergang zwischen zwei Querschnitten und/oder zwei unterschiedlichen Geometrien kann mittels eines Absatzes erfolgen, in dem vorzugsweise der Lautsprecher angeordnet ist. Erfindungsgemäß weist das Kraftfahrzeugkombinationsinstrument ein hinteres, dem Fahrzeuginsassen abgewandtes Gehäuse auf. Das vordere und das hintere Gehäuse werden erfindungsgemäß durch die Platine getrennt. Besonders bevorzugt ist der Akustikkörper an dem hinteren Gehäuse, insbesondere an dessen Rückwand (5.1) angeordnet. Das vordere und das hintere Gehäuse sind vorzugsweise miteinander verbunden.
Gemäß einer bevorzugten Ausführungsform der vorliegenden Erfindung ist zwischen dem vorderen oder hinteren Gehäuse und dem Akustikkörper eine Schalldichtung vorgesehen. Diese Schalldichtung ist vorzugsweise kreisringförmig ausgebildet. Erfindungsgemäß ist der Akustikkörper an der Platine angeordnet, mit der Platine stoff-, form- und/oder kraftschlüssig verbunden. Diese Verbindung erfolgt vorzugsweise durch eine Schnappverbindung, beispielsweise eine Clipsverbindung. Der Akustikköper wird vorzugsweise auf der dem Fahrzeuginsassen abgewandten Seite der Platine angeordnet, so dass er sich zwischen der Platine und dem hinteren Gehäuse befindet.
Vorzugsweise ist in der Platine mindestens eine Ausnehmung, insbesondere im Bereich des Akustikkörpers, vorgesehen, durch die sich die Schallwellen nahezu ungehindert in Richtung des Fahrzeuginsassen ausbreiten können.
Vorzugsweise ist in dem vorderen Gehäuse mindestens eine Ausnehmung vorgesehen, die besonders bevorzugt fluchtend mit der Ausnehmung in der Platine angeordnet ist. Auch durch diese Ausnehmungen wird die Ausbreitung der Schallwellen in Richtung des Fahrzeuginsassen verbessert.
Vorzugsweise ist zwischen der Platine und dem Akustikkörper keine Schallisolierung angeordnet.
Vorzugsweise ist in dem vorderen Gehäuse ein Hohlraum als Resonanzkörper, besonders bevorzugt im Bereich des Akustikkörpers, vorgesehen.
Gemäß einer bevorzugten Ausführungsform der vorliegenden Erfindung weist das hintere Gehäuse, insbesondere die Rückwand des hinteren Gehäuses, um den Schallaustrittsbereich des Akustikkörpers herum keine weiteren Ausnehmungen auf.

Im Folgenden wird die Figur anhand der Figuren 1 - 7 erläutert. Diese Erläuterungen sind lediglich beispielhaft und schränken den allgemeinen Erfindungsgedanken nicht ein.
- **Figur 1**: zeigt einen Schnitt durch das erfindungsgemäße Kraftfahrzeugkombinationsinstrument.
- **Figur 2**: zeigt den Akustikkörper.
- **Figur 3**: zeigt die Platine.
- **Figur 4**: zeigt einen weiteren Schnitt durch das Kraftfahrzeugkombinationsinstrument und ein Detail des vorderen Gehäuses.
- **Figur 5**: zeigt Details der Verbindung zwischen dem Akustikkörper und der Platine.
- **Figur 6**: zeigt einen weiteren Schnitt durch das erfindungsgemäße Kraftfahrzeugkombinationsinstrument.
- **Figur 7**: zeigt den Schallaustrittsbereich im hinteren Gehäuse.

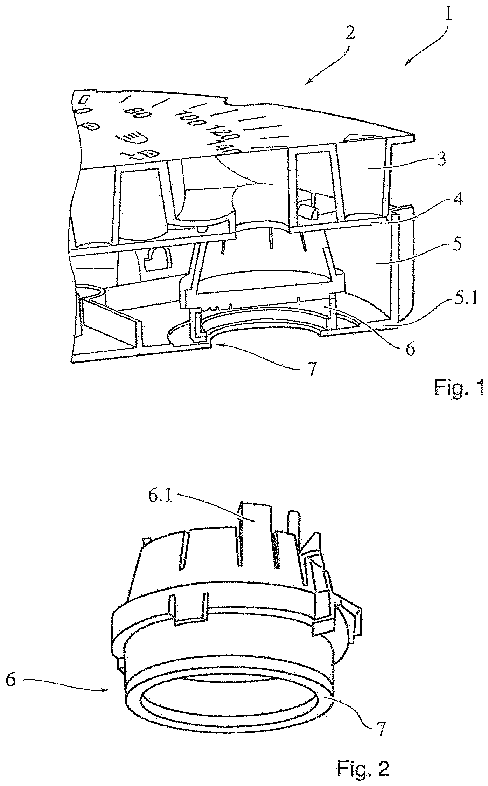

**Figur 1** zeigt einen Schnitt durch das erfindungsgemäße Kraftfahrzeugkombinationsinstrument 1. Dieses weist ein vorderes, zu dem Fahrzeuginsassen hin gerichtetes Gehäuse 3, ein sogenanntes Lichthaus, auf, das in dem vorliegenden Teil mit einer Abdeckung 2 versehen ist, die beispielsweise eine Skala für beispielsweise ein Tachometer, aber auch mehrere Symbole für Warnhinweise aufweist. Unterhalb des vorderen Gehäuses, d. h. von dem Fahrzeuginsassen weg gerichtet, ist eine Platine 4 vorgesehen, die die Elektrik/Elektronik für das erfindungsgemäße Kraftfahrzeugkombinationsinstrument aufweist. Unterhalb von der Platine 4, d. h. noch weiter von dem Fahrzeugsitzinsassen weg gerichtet, ist ein hinteres Gehäuse 5 vorgesehen, das in dem vorliegenden Fall eine Rückwand 5.1 aufweist. Zwischen der Platine und der Rückwand des hinteren Gehäuses 5 ist ein Akustikkörper 6 vorgesehen, der erfindungsgemäß als Helmholtz-Resonator ausgeführt ist. Dieser Akustikkörper ist in einem Teil zylindrisch und in einem weiteren Teil konisch ausgebildet. Zwischen dem konischen und dem zylindrischen Teil befindet sich der Lautsprecher 9. Zwischen der Rückwand 5.1 des Gehäuses 5 und dem Akustikkörper 6 ist in dem vorliegenden Fall eine Dichtung 7 vorgesehen, die diesen Bereich gegen einen Verlust von Schallwellen abdichtet.

**Figur 2** zeigt Details des Akustikkörpers 6. Insbesondere ist zu sehen, dass der Akustikkörper mittels Befestigungsmitteln 6.1, hier Rastmitteln, an der Platine 4 befestigt wird. Ferner ist die in dem Verbindungsbereich zu der Rückwand des Gehäuses 5.1 vorgesehene Dichtung 7 zu sehen.

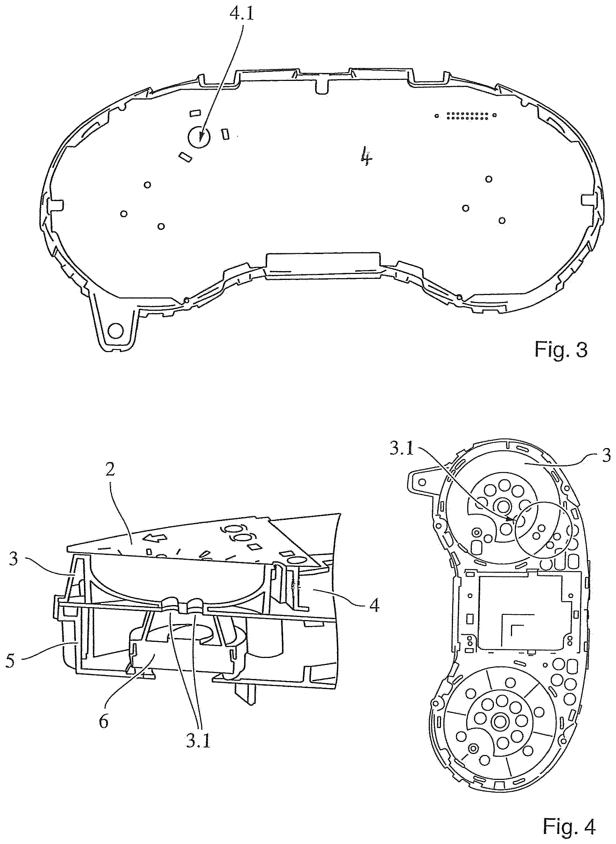

**Figur 3** zeigt die Platine 4. Diese weist im Bereich der Verbindung mit dem Akustikkörper eine Ausnehmung 4.1 auf, durch die die Schallwellen zumindest nahezu ungehindert in Richtung des Fahrzeuginsassen gelangen können. Außerdem sind drei Ausnehmung zur Befestigung des Akustikkörpers an der Platine zu sehen.

**Figur 4** zeigt ein weiteres Detail des vorderen Gehäuses 3. Dieses weist mindestens eine, hier zwei Ausnehmungen 3.1 auf, die vorzugsweise fluchtend mit einer oder mehreren Ausnehmungen 4.1 der Platine vorgesehen sind und die wiederum bewirken, dass sich Schallwellen ungehindert in Richtung des Fahrzeuginsassen ausbreiten können.

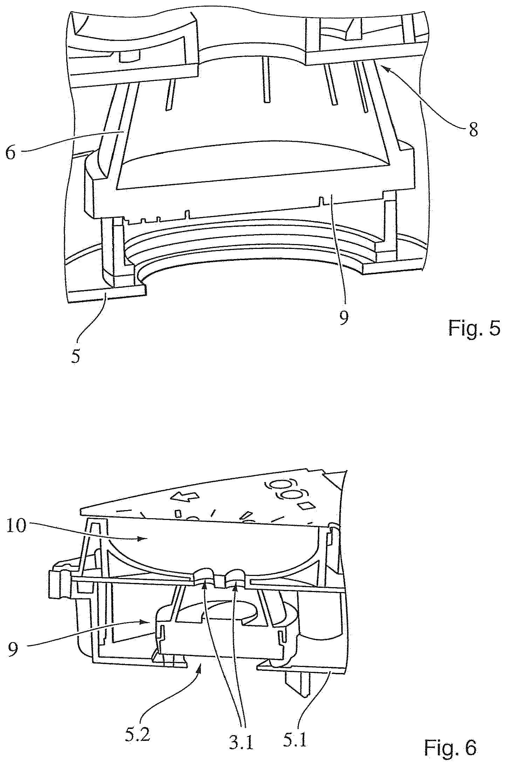

Anhand von **Figur 5** kann der Fachmann entnehmen, dass zwischen der Platine 4 und dem Akustikkörper keine Schalldichtung vorgesehen ist. Dadurch wird die Montage des Akustikkörpers 6 an der Platine vereinfacht.

Gemäß der Ausführungsform, die in **Figur 6** gezeigt ist, ist in dem vorderen Gehäuse 3 ein Hohlraum 10 vorgesehen, der vorzugsweise als Resonator für die Schallwellen dient. Vorzugsweise ist der Hohlraum 10 zumindest teilweise fluchtend mit dem Akustikkörper 6 vorgesehen. Die Ausnehmung(en) 3.1 ist/sind i, Beriech des Hohlraums 10 vorgesehen.

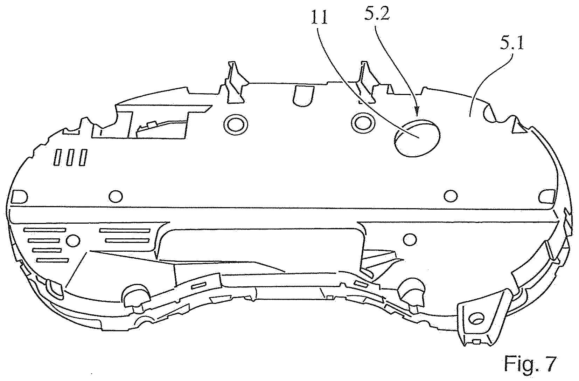

**Figur 7** zeigt, den Schallaustrittsbereich 5.2 im hinteren Gehäuse, hier in der Rückwand 5.1 des hinteren Gehäuses. Durch diese Öffnung kann der von dem Lautsprecher erzeugte Schalldruck in den Bereich jenseits der Rückwand entweichen. In dem vorliegenden Fall ist die Schallaustrittsöffnung mit einer Abdeckung versehen, die vorzugsweise Teil des Akkustikkörpers ist, beispielsweise um den Eintritt von Verschmutzungen zu verhindern. Vorzugsweise weist das hintere Gehäuse, insbesondere die Rückwand des hinteren Gehäuses, um den Schallaustrittsbereich des Akustikkörpers herum keine weitere(n) Ausnehmung(en) auf.

### Bezugszeichenliste:

- 1: Kraftfahrzeugkombinationsinstrument eines Fahrzeuges
- 2: Abdeckung, beispielsweise mit einer Skala
- 3: vorderes Gehäuse, Lichthaus
- 3.1: Ausnehmung in der oberen Abdeckung
- 4: Platine
- 4.1: Ausnehmung
- 5: hinteres Gehäuse
- 5.1: Rückwand des Gehäuses
- 5.2: Schallaustrittsbereich im hinteren Gehäuse, insbesondere in dessen Rückwand
- 6: Akustikkörper, Helmholtz-Resonator, Röhre
- 6.1: Befestigungsmittel, Rastmittel
- 7: Anschluss an die Rückwand 5.1 des hinteren Gehäuses 5, Dichtung
- 8: Verbindungsbereich zwischen der Platine und dem Akustikkörper 6
- 9: Lautsprecher
- 10: Hohlraum
- 11: Abdeckung des Schallaustrittsbereichs

## Patentansprüche

1. Kraftfahrzeugkombinationsinstrument (1) mit einem vorderen, zu einem Fahrzeuginsassen hin gerichteten Gehäuse (3) und einem hinteren, dem Fahrzeuginsassen abgewandten Gehäuse (5), wobei das vordere und das hintere Gehäuse durch eine Platine (4) getrennt sind, , wobei das Kraftfahrzeugkombinationsinstrument (1) ferner einen Lautsprecher (9) aufweist, **dadurch gekennzeichnet, dass** ein Akustikkörper (6) mit der Platine (4) stoff-, form- und/oder kraftschlüssig verbunden ist, wobei der Akustikkörper (6) in einem Teil zylindrisch und in einem weiteren Teil konisch ausgebildet ist, wobei der Lautsprecher (9) zwischen dem konischen und dem zylindrischen Teil des Akustikkörpers (6) angeordnet ist, wobei der Akustikkörper (6) als Helmholtz-Resonator wirkt.

2. Kraftfahrzeugkombinationsinstrument (1) nach Anspruch 1, **dadurch gekennzeichnet, dass** der Akustikkörper (6) rohrförmig ausgebildet ist.

3. Kraftfahrzeugkombinationsinstrument (1) nach einem der voranstehenden Ansprüche, **dadurch gekennzeichnet, dass** der Akustikkörper (6) an dem hinteren Gehäuse (5), insbesondere an dessen Rückwand (5.1), angeordnet ist.

4. Kraftfahrzeugkombinationsinstrument (1) nach Anspruch 3, **dadurch gekennzeichnet, dass** zwischen der Rückwand (5.1) des hinteren Gehäuses (5) und dem Akustikkörper (6) eine Schalldichtung vorgesehen ist.

5. Kraftfahrzeugkombinationsinstrument (1) nach einem der voranstehenden Ansprüche, **dadurch gekennzeichnet, dass** in der Platine (4) mindestens eine Ausnehmung (4.1), insbesondere im Bereich des Akustikkörpers (6), vorgesehen ist.

6. Kraftfahrzeugkombinationsinstrument (1) nach einem der voranstehenden Ansprüche, **dadurch gekennzeichnet, dass** in dem vorderen Gehäuse (3) mindestens eine Ausnehmung (3.1) vorgesehen ist, die vorzugsweise fluchtend mit den Ausnehmungen (4.1) angeordnet ist.

7. Kraftfahrzeugkombinationsinstrument (1) nach einem der voranstehenden Ansprüche, **dadurch gekennzeichnet, dass** zwischen der Platine (4) und dem Akustikkörper (6) keine Schallisolierung angeordnet ist.

8. Kraftfahrzeugkombinationsinstrument (1) nach einem der voranstehenden Ansprüche, **dadurch gekennzeichnet, dass** in dem vorderen Gehäuse (3) ein Hohlraum als Resonanzkörper, vorzugsweise im Bereich des Akustikkörpers (6), vorgesehen ist.

9. Kraftfahrzeugkombinationsinstrument (1) nach einem der voranstehenden Ansprüche, **dadurch gekennzeichnet, dass** das hintere Gehäuse (5), insbesondere die Rückwand (5.1) des hinteren Gehäuses (5), um einen Schallaustrittsbereich (5.2) des Akustikkörpers (6) herum keine weiteren Ausnehmungen aufweist.

## Claims

1. Motor vehicle combined instrument (1) having a front housing (3) which is directed towards a vehicle occupant and a rear housing (5) facing away from the vehicle occupant, wherein the front and rear housings are separated by a circuit board (4), wherein the motor vehicle combined instrument (1) also has a loudspeaker (9), **characterized in that** an acoustic element (6) is connected to the circuit board (4) in a materially joined, positively locking and/or frictionally locking fashion, wherein the acoustic element (6) is of cylindrical design in one part and of conical design in a further part, wherein the loudspeaker (9) is arranged between the conical part and the cylindrical part of the acoustic element (6), wherein the acoustic element (6) acts as a Helmholtz resonator.

2. Motor vehicle combined instrument (1) according to Claim 1, **characterized in that** the acoustic element (6) is of tubular design.

3. Motor vehicle combined instrument (1) according to one of the preceding claims, **characterized in that** the acoustic element (6) is arranged on the rear housing (5), in particular on the rear wall (5.1) thereof.

4. Motor vehicle combined instrument (1) according to Claim 3, **characterized in that** sound insulation is provided between the rear wall (5.1) of the rear housing (5) and the acoustic element (6).

5. Motor vehicle combined instrument (1) according to one of the preceding claims, **characterized in that** at least one cutout (4.1) is provided in the circuit board (4), in particular in the region of the acoustic body (6).

6. Motor vehicle combination instrument (1) according to one of the preceding claims, **characterized in that** at least one cutout (3.1) is provided in the front housing (3) and is preferably arranged flush with the cutouts (4.1).

7. Motor vehicle combined instrument (1) according to one of the preceding claims, **characterized in that** no sound insulation is arranged between the circuit board (4) and the acoustic element (6).

8. Motor vehicle combined instrument (1) according to one of the preceding claims, **characterized in that** a cavity is provided as a resonant body in the front housing (3), preferably in the region of the acoustic element (6).

9. Motor vehicle combined instrument (1) according to one of the preceding claims, **characterized in that** the rear housing (5), in particular the rear wall (5.1) of the rear housing (5), does not have any further cutouts around a sound exit region (5.2) of the acoustic element (6).

## Revendications

1. Instrument combiné pour véhicule automobile (1), comprenant un boîtier avant (3) orienté en direction d'un occupant du véhicule et un boîtier arrière (5) à l'opposé de l'occupant du véhicule, les boîtiers avant et arrière étant séparés par une platine (4), l'instrument combiné pour véhicule automobile (1) possédant en outre un haut-parleur (9), **caractérisé en ce qu'**un corps acoustique (6) est relié à la platine (4) par fusion de matières, par complémentarité de formes et/ou par assemblage de force, le corps acoustique (6) étant de configuration cylindrique dans une partie et conique dans une autre partie, le haut-parleur (9) étant disposé entre la partie cylindrique et la partie conique du corps acoustique (6), le corps acoustique (6) agissant comme un résonateur de Helmholtz.

2. Instrument combiné pour véhicule automobile (1) selon la revendication 1, **caractérisé en ce que** le corps acoustique (6) est réalisé en forme de tube.

3. Instrument combiné pour véhicule automobile (1) selon l'une des revendications précédentes, **caractérisé en ce que** le corps acoustique (6) est disposé sur le boîtier arrière (5), notamment sur sa paroi arrière (5.1).

4. Instrument combiné pour véhicule automobile (1) selon la revendication 3, **caractérisé en ce qu'**une isolation acoustique est présente entre la paroi arrière (5.1) du boîtier arrière (5) et le corps acoustique (6).

5. Instrument combiné pour véhicule automobile (1) selon l'une des revendications précédentes, **caractérisé en ce qu'**au moins une cavité (4.1) est présente dans la patine (4), notamment dans la zone du corps acoustique (6).

6. Instrument combiné pour véhicule automobile (1) selon l'une des revendications précédentes, **caractérisé en ce qu'**au moins une cavité (3.1) est présente dans le boîtier avant (3), laquelle est de préférence disposée dans l'alignement des cavités (4.1).

7. Instrument combiné pour véhicule automobile (1) selon l'une des revendications précédentes, **caractérisé en ce qu'**aucune isolation acoustique n'est disposée entre la platine (4) et le corps acoustique (6).

8. Instrument combiné pour véhicule automobile (1) selon l'une des revendications précédentes, **caractérisé en ce qu'**un espace creux faisant office de corps de résonance est présent dans le boîtier avant (3), de préférence dans la zone du corps acoustique (6).

9. Instrument combiné pour véhicule automobile (1) selon l'une des revendications précédentes, **caractérisé en ce que** le boîtier arrière (5), notamment la paroi arrière (5.1) du corps arrière (5), ne possède pas de cavités supplémentaires autour d'une zone de sortie du son (5.2) du corps acoustique (6).
